# EUROPÄISCHE PATENTANMELDUNG

(11) **EP 0 914 773 A1**
(43) Veröffentlichungstag der Anmeldung: **12.05.1999**
(21) Anmeldenummer: 98119195.0
(22) Anmeldetag: 12.10.1998
(51) Int. Cl.: A23G 1/04, A23G 1/18

(54) **Vorrichtung zum Aufbereiten von kakaobutterhaltigen oder ähnlichen fetthaltigen Massen, insbesondere Schokolademasse**

(30) Priorität: 07.11.1997 DE 19749324
(71) Anmelder: Hosokawa Kreuter GmbH, 22419 Hamburg (DE)
(72) Erfinder: Koch, Peter, 25421 Pinneberg (DE)
(74) Vertreter: von Raffay, Vincenz, Dipl.-Ing.

(57) **Zusammenfassung**

Die Vorrichtung dient der Verarbeitung verschiedenster fetthaltiger Massen, insbesondere Schokolademassen. Sie weist einen äußeren ortsfesten Kühlzylinder auf, durch dessen Innenraum die aufzubereitende Masse aus dem Bereich der einen Stirnfläche in den Bereich der anderen Stirnfläche gepumpt wird. In dem Innenraum befindet sich ein angetriebenes Drehelement. Nach innen wird der Innenraum durch einen konzentrischen, angetriebenen Innenzylinder (3) kleineren Durchmessers begrenzt, so daß ein ringförmiger Innenraum besteht. In dem Innenraum sind eine Anzahl von Rührwalzen (1) angeordnet, die das Rührelement bilden. Diese Innenwalzen rollen vorzugsweise auf den Innenwänden der Zylinder (2,3) ab. Die Achsen (4) der Rührwalzen verlaufen parallel zu der gemeinsamen Mittelachse (16) der Zylinder und sie liegen auf einem gemeinsamen Durchmesser, der wiederum die Achse (16) zur Mittelachse hat. Die Rührwalzen (1) werden durch den Innenzylinder angetrieben, d.h. in Drehung versetzt, und zwar entweder formschlüssig durch ein Getriebe oder kraftschlüssig durch Reibung, d.h. durch Mitnahme durch den drehangetriebenen Innenzylinder. Die kraftschlüssige Verbindung wird vorzugsweise durch ein Planetengetriebe erreicht, bei der die Rührwalzen die Planetenräder (13) und der Innenzylinder (3) das Sonnenrad (12) bilden. Durch diese Vorrichtung wird die gesamte Masse während der Förderung durch den Ringraum unmittelbar bearbeitet und durch die Spalte zwischen den Innenflächen der Zylinder und den angrenzenden Flächen der Rührwerke gepreßt. Toträume, in denen ein Masseaufbau erfolgen kann, sind nicht vorhanden. Der Wärmeübergang wird dadurch begünstigt, daß die Kühlwirkung auch direkt auf die Rührwalzen übertragen wird. Die Förderung der Masse erfolgt allein durch die Pumpe. Die Rührwalzen fördern nicht, so daß sie ausgelegt und angetrieben werden können, allein im Hinblick auf die Aufbereitung der Masse, d.h. in Anpassung an die Zusammensetzung und die Eigenschaften der Masse.

## Beschreibung

Die Erfindung betrifft eine Vorrichtung nach dem Oberbegriff des Anspruches 1.

Bei einer bekannten Vorrichtung der vorstehend genannten Art werden drei Zylinder eingesetzt, die in Reihe hintereinandergeschaltet sind. In jedem Zylinder befindet sich eine angetriebene Schnecke, die das Rührelement bildet. Die drei Zylinder bilden Kühl- oder Reifezonen. An der Schnecke kann sich Masse absetzen, die dann nicht mehr oder nur verzögert an dem eigentlichen Aufbereitungsprozeß teilnimmt. Die Schnecke beeinflußt auch die Förderung durch den Zylinder, wobei das Ausmaß der Förderung durch die Steigung festgelegt ist. Dieses ist nicht immer erwünscht, da die Flexibilität hierdurch eingeschränkt wird. Darüberhinaus ist die Vorrichtung aufwendig, da mehrere Zylinder hintereinandergeschaltet sein müssen, um für jede Kühl- oder Reifestufe die entsprechenden Verarbeitungsparameter einstellen zu können.

Aus der DE-OS 88 17 255 ist eine andere Vorrichtung bekannt, die mit einem Zylinder auskommt, bei der aber eine Vielzahl von Kühletagen übereinander angeordnet sind. Durch jede Kühletage wird ein Rührverkzeug bewegt. Jedes Rührwerkzeug ist auf einer gemeinsamen Antriebswelle befestigt. Auch hier kann ein Masseaufbau in den einzelnen Kühlkammern nicht vermieden werden.

Der Erfindung liegt nun die Aufgabe zugrunde, eine Vorrichtung der eingangs genannten Art zu schaffen, die im wesentlichen einen Masseaufbau in dem Innenraum oder an dem Rührer dadurch verhindert, daß sämtliche Flächen, an denen dieses möglich ist, von anderen Flächen überstrichen und damit gereinigt werden. Auch sollen möglichst alle Flächen, auch die des Rührelementes, für den Wärmeübergang genutzt werden.

Diese Aufgabe wird grundsätzlich durch das Kennzeichen des Anspruches 1 gelöst. In vorteilhafter Weise sind die Rührwalzen so im Verhältnis zu dem Innenraum dimensioniert, daß sie auf den Innenwänden der Zylinder abrollen, d.h. daß dort eine Berührung stattfindet.

Es ist entweder möglich, die Rührwalzen zwangsläufig, d.h. formschlüssig, anzutreiben. Dies geschieht durch ein Planetengetriebe (Ansprüche 3 und 4).

Es ist aber auch möglich, einen kraftschlüssigen Antrieb durch Reibungskraft vorzusehen. Dieses geschieht in vorteilhafter Weise so, wie in Anspruch 5 angegeben. In diesem Falle sind die einzelnen Rührwalzen miteinander durch einen Käfig verbunden, so daß sie bei Drehantrieb des Innenzylinders von diesem mitgenommen werden. Der Abstand zwischen den Rührwalzen wird durch den Käfig konstant gehalten.

Die erfindungsgemäße Vorrichtung stellt sicher, daß sämtliche Oberflächen in dem Innenraum, d.h. die Flächen der Zylinder und der Rührwalzen, abgestriffen werden, d.h. ein unerwünschter Masseaufbau ist hier nicht möglich. Bei dem Abrollen der Rührwalzen auf der Innen- und Außenwand werden die Rührwalzen selbst und die entsprechenden Wände gereinigt. Alle Oberflächen in dem Innenraum stehen in wechselndem mechanischen Kontakt zueinander und können damit zur Wärmeübetragung genutzt werden. Hierdurch wird der Wirkungsgrad der Kühlung verbessert. Durch die Relativbewegung zwischen den Oberflächen der Zylinder und der Rührwalzen wird die Masse in die entsprechenden Spaltpassungen hineingequetscht und mit hohem Druck bearbeitet.

Die Anzahl der Rührwalzen ist nicht festgelegt. Sie kann der zu verarbeitenden Masse, insbesondere ihrer Viskosität, angepaßt werden. Bei hoher Viskosität werden entsprechend weniger Rührwalzen eingesetzt. In einer häufig vorgesehenen Reifezone am Ende der Verarbeitung, d.h. nach der oder den Kühlzonen, wird durch Kristallisationswärme und mechanische Reibungswärme die Kristallbildung stabilisiert und unerwünschte Kristallformen abgeschmolzen. Eine sog. Anwärmzone kann damit entfallen.

Die Rührwalzen fördern die Masse nicht. Die Förderung geschieht allein durch die Pumpe, die die Masse durch den ringförmigen Innenraum pumpt. Damit ist eine sehr flexiblere Steuerung möglich. Die Drehzahl der Rührwalzen ist völlig unabhängig von der Durchflußmenge. Die Drehzahl kann beispielsweise zur Steuerung der Masseerwärmung in der Reifezone nach der Kühlzone frei eingestellt werden.

Im folgenden wird die Erfindung unter Hinweis auf die Zeichnung anhand zweier Ausführungsbeispiele näher erläutert.

Es zeigt:
- Fig. 1: einen Längsschnitt durch eine Ausführungsform einer Vorrichtung nach der Erfindung;
- Fig. 2: einen Querschnitt gemäß der Linie A-A der Fig. 1; und
- Fig. 3: einen der Fig. 2 entsprechenden Querschnitt, jedoch einer anderen Ausführungsform.

Die Vorrichtung, die in der Zeichnung dargestellt ist, die auch als sog. Temperiervorrichtung bezeichnet werden kann, besteht aus einem ortsfesten Kühlzylinder 2 mit einer Mittelachse 16. Ein Innenzylinder 3 mit kleinerem Durchmesser ist in dem Kühlzylinder konzentrisch angeordnet. Seine Mittelachse fällt mit der Mittelachse 16 zusammen. Dieser Innenzylinder ist mit einer Welle 11 verbunden, die durch einen nicht gezeigten Motor drehangetrieben wird. Zwischen den beiden Zylindern 2 und 3 ist ein ringförmiger Innenraum 10 frei, in dem die Aufarbeitung der Masse stattfindet. Die Masse wird bei 7 mit Hilfe einer Pumpe zu- und bei 8 abgeführt.

In Förder- oder Behandlungsrichtung, d.h. von der einen Stirnfläche zur anderen, ist die Außenfläche des Kühlzylinders 2 in mehrere Kühlstufen 5 eingeteilt. Das Kühlmittel wird durch Stutzen 6 zu- und durch Stutzen 9 abgeführt. Beispielsweise kann die letzte Zone in Förderrichtung, d.h. die, die an die Abführöffnung 8 angrenzt, auch ohne Kühlung betrieben werden. Dieses hängt ganz von den Anforderungen ab, die an die oder von der zu verarbeitenden Masse gestellt werden.

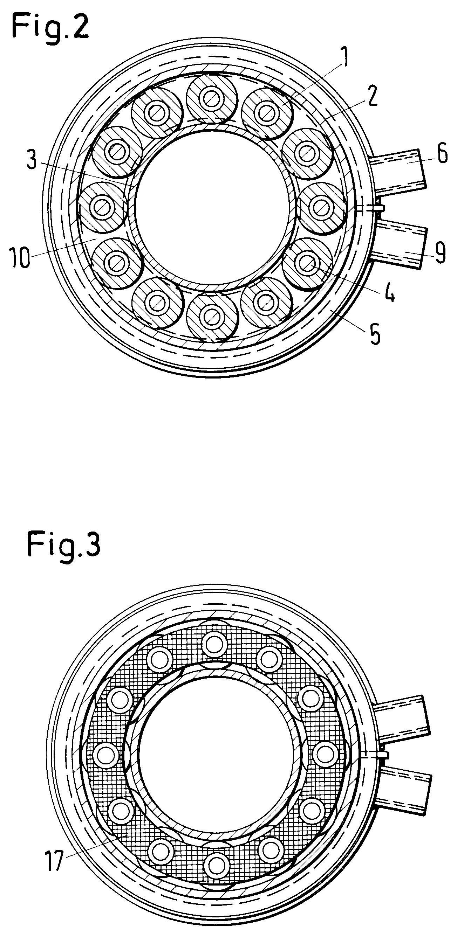

Der ringförmige Innenraum 10 wird durch eine Anzahl von Rührwalzen 1 ausgefüllt, die um Achsen 4 drehbar sind. Die Achsen 4 werden durch entsprechende Wellen gebildet, auf denen die Rührwalzen 1 drehbar gelagert sind. Die Achsen 4 liegen auf einem gemeinsamen Durchmesser, dessen Mittelachse wiederum die Mittelachse 16 ist. Die geometrischen Verhältnisse werden ohne weiteres beim Betrachten der Fig. 2 oder 3 deutlich. Die Rührwalzen 1 haben einen Durchmesser, der der Differenz der Durchmesser der beiden Zylinder 2 und 3 entspricht, so daß sie auf den Innenwänden der Zylinder abrollen.

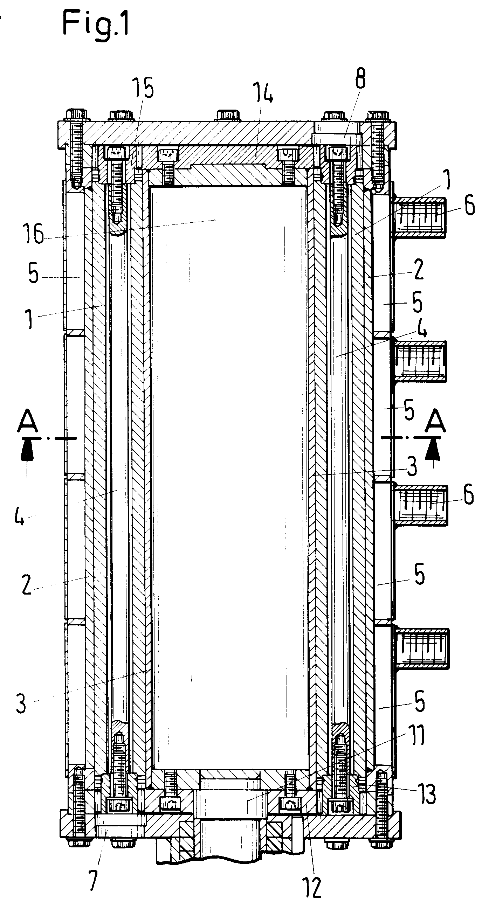

Bei der Ausführungsform nach den Fig. 1 und 2 bilden die Rührwalzen 1 praktisch Planetenräder und der Innenzylinder 3 das Sonnenrad eines Planetengetriebes. Bei der gezeigten Ausführungsform ist der Innenzylinder 3 oben und unten je an einem Sonnenrad 12,14 befestigt. Jede Rührwalze ist mit einem Planetenrad 13 bzw. 15 verbunden. Die Zahnräder der entsprechenden Planetenräder 13,15 stehen mit den Zähnen der zugehörigen Sonnenräder 12 und 14 im Eingriff. Bei dieser Ausführungsform nach den Fig.1 und 2 erfolgt ein formschlüssiger Antrieb. Wenn die Sonnenräder 12 und 14 über die Welle 11 drehangetrieben werden, treiben sie die Planetenräder 13 und 15 an, so daß die Rührwalzen 1 entsprechend in Drehung versetzt werden.

Bei der Ausführungsform nach Fig. 3 fehlt es an dem Planetengetriebe. Hier erfolgt der Antrieb kraftschlüssig. In Drehung versetzt wird lediglich der Innenzylinder 2. Durch die Reibung zwischen dem Innenzylinder und den einzelnen Rührwalzen 1 werden diese in Drehung versetzt. Durch die Käfige 17 werden sie in einem gleichen Abstand zueinander gehalten, so daß sie sich entsprechend gleichmäßig durch den ringförmigen Innenraum 10 bewegen.

Die bei 7 zugeführte Masse wird, je nach ihrer Zusammensetzung ihrer Viskosität und ihren sonstigen Eigenschaften, entsprechend schnell oder langsam durch den ringförmigen Innenraum 10 gepumpt. Hierbei wird sie durch die Spaltpassungen zwischen den Rührwalzen und den angrenzenden Innenwänden der Zylinder gepreßt. Es sind in dem Innenraum keine Flächen vorhanden, über die nicht andere Flächen bewegt werden, so daß diese Flächen immer wieder abgestriffen und gereinigt werden. Es wird jeglicher Masseaufbau vermieden.

Die Rührzylinder führen eine Förderung nicht durch. Sie wirken lediglich in der gewünschten Weise auf die Masse ein, je nachdem, wie schnell der Innenzylinder angetrieben wird. Die Fördermenge wird unabhängig durch die Pumpe (nicht gezeigt) bestimmt. Die Rührzylinder nehmen an dem Wärmeübergang teil, da sie durch die Berührung an der Innenfläche des äußeren Kühlzylinders 2 ebenfalls gekühlt werden.

Der Wirkungsgrad der Vorrichtung hinsichtlich Kühlung und Wärmebeeinflussung ist optimal. Die Förderung der Masse durch die Vorrichtung kann unter Berücksichtigung der unterschiedlichsten Parameter frei eingestellt werden. Die Anzahl der Rührwalzen 1 kann unterschiedlich sein, und zwar in Anpassung an die zu behandelnde Masse, insbesondere an die Viskosität. Je höher die Viskosität, je weniger Rührwalzen.

## Patentansprüche

1. Vorrichtung zum kontinuierlichen Aufbereiten von kakaobutterhaltigen oder ähnlichen fetthaltigen Massen, insbesondere Schokolademasse, mit einem äußeren, ortsfesten Kühlzylinder, durch dessen Innenraum die aufzubereitende Masse aus dem Bereich der einen Stirnfläche in den Bereich der anderen Stirnfläche gepumpt wird und mit einem angetriebenen Rührelement in dem Innenraum des Kühlzylinders, dadurch gekennzeichnet, daß in dem Kühlzylinder (2) konzentrisch ein angetriebener Innenzylinder (3) kleineren Durchmessers angeordnet ist, die den ringförmigen Innenraum (10) begrenzen, daß in dem ringförmigen Innenraum eine Anzahl von das Rührelement bildenden Rührwalzen (1) angeordnet sind, deren Achsen (4) parallel zu der Achse (16) der Zylinder (2,3) verlaufen, und die auf einem gemeinsamen Durchmesser liegen, und daß die Rührwalzen (1) durch den Innenzylinder (3) angetrieben werden.

2. Vorrichtung nach Anspruch 1, dadurch gekennzeichnet, daß die Rührwalzen (1) an den Innenwänden der Zylinder (2,3) abrollen.

3. Vorrichtung nach Anspruch 1 oder 2, dadurch gekennzeichnet, daß die Rührwalzen (1) die Planetenräder und der Kühlzylinder (3) das Sonnenrad eines Planetengetriebes sind.

4. Vorrichtung nach Anspruch 3, dadurch gekennzeichnet, daß die Rührwalzen (1) mit Planetenrädern (13) und der Innenzylinder (3) mit dem Sonnenrad (12) eines Planetengetriebes (12,13) verbunden sind.

5. Vorrichtung nach Anspruch 1 oder 2, dadurch gekennzeichnet, daß die Rührwalzen (1) nach Art eines Wälzlagers durch einen oder mehrere Käfige (17) zur gemeinsamen Bewegung miteinander verbunden sind.

6. Vorrichtung nach einem oder mehreren der vorstehenden Ansprüche, dadurch gekennzeichnet, daß die Rührwalzen Zylinder mit gleichem Querschnitt sind.

7. Vorrichtung nach einem oder mehreren der Ansprüche 1 bis 5, dadurch gekennzeichnet, daß die Rührwalzen Kegel mit kreisförmigem Querschnitt sind.
